# EUROPÄISCHE PATENTSCHRIFT

(11) **EP 3 809 078 B1**
(45) Veröffentlichungstag und Bekanntmachung des Hinweises auf die Patenterteilung: **06.12.2023**
(21) Anmeldenummer: 20199784.8
(22) Anmeldetag: 02.10.2020
(51) Int. Cl.: F25D 23/06

(54) **HAUSHALTSKÄLTEGERÄTEVORRICHTUNG**
HOUSEHOLD REFRIGERATING APPLIANCE
APPAREIL DE FROID ÉLECTROMÉNAGER

(30) Priorität: 18.10.2019 DE 102019216095
(43) Veröffentlichungstag der Anmeldung: 21.04.2021
(73) Patentinhaber: BSH Hausgeräte GmbH, 81739 München (DE)
(72) Erfinder: Rettenberger, Harald, 89428 Syrgenstein (DE); Rödter, Maximilian, 89537 Giengen (DE); Kemmer, Andreas, 89522 Heidenheim (DE)

(56) Entgegenhaltungen:
- JP-A- S 599 483
- JP-A- H1 054 496
- JP-A- H07 237 230
- JP-A- S59 127 737
- US-A- 3 364 941

## Beschreibung

Die Erfindung betrifft eine Haushaltskältegerätevorrichtung nach dem Oberbegriff des Anspruchs 1 und ein Verfahren zu einer Herstellung einer Haushaltskältegerätevorrichtung nach dem Oberbegriff des Anspruchs 14.

Aus dem Stand der Technik, wie offenbart in JP H07-237230 , JP S59-9483 und US3364941, ist bereits ein Haushaltskältegerät mit einer Haushaltskältegerätevorrichtung bekannt, welche einen Korpus aufweist. Der Korpus ist ein Gerätekorpus und begrenzt in einem Betriebszustand einen Isolationsraum gemeinsam mit einem Gerätetürkorpus. Zu einem Einfüllen von Isolationsmaterial in den Isolationsraum weist der Gerätekorpus eine Einfüllöffnung auf. Die Haushaltskältegerätevorrichtung weist eine Ventileinheit mit einem Ventilelement auf, welches zumindest vor dem Einfüllen des Isolationsmaterials abschnittsweise beweglich relativ zu dem Korpus an dem Korpus gelagert ist. Das Ventilelement ist zu einem Verschließen der Einfüllöffnung vorgesehen. Das Ventilelement besteht aus einer einzigen Materiallage.

Die Aufgabe der Erfindung besteht insbesondere, aber nicht beschränkt darauf, darin, eine gattungsgemäße Vorrichtung vorteilhaft weiterzuentwickeln. Die Aufgabe wird erfindungsgemäß durch die Merkmale der Ansprüche 1 und 14 gelöst, während vorteilhafte Ausgestaltungen und Weiterbildungen der Erfindung den Unteransprüchen entnommen werden können.

Die Erfindung geht aus von einer Haushaltskältegerätevorrichtung mit zumindest einem Korpus, welcher zumindest einen Isolationsraum wenigstens teilweise begrenzt und welcher zumindest eine Einfüllöffnung zu einem Einfüllen von Isolationsmaterial in den Isolationsraum aufweist, und mit zumindest einer Ventileinheit, welche zumindest ein Ventilelement aufweist. Das Ventilelement kann wenigstens abschnittsweise beweglich relativ zu dem Korpus an dem Korpus gelagert sein, insbesondere auf einer dem Isolationsraum zugewandten Seite, und insbesondere vor dem Einfüllen des Isolationsmaterials.

Es wird vorgeschlagen, dass das Ventilelement zumindest eine erste Materiallage und zumindest eine von der ersten Materiallage verschiedene zweite Materiallage aufweist.

Durch eine derartige Ausgestaltung kann insbesondere eine gattungsgemäße Vorrichtung vorteilhaft weiterentwickelt werden. Insbesondere kann eine besonders hohe Flexibilität erzielt werden, da beispielsweise verschiedene Materialien für die Materiallage und/oder verschiedene Dicken der Materiallagen gewählt werden können. Beispielsweise könnten verschiedene Materialien mit verschiedenen Dicken und/oder mit verschiedenen Materialeigenschaften für die Materiallagen gewählt werden. Insbesondere aufgrund der Wahl der Dicken und/oder Materialeigenschaften, könnte beispielsweise zumindest eine Materiallage als eine Dichtschicht und zumindest eine weitere Materiallage als eine Flammschutzschicht vorgesehen sein. Es kann insbesondere eine einfache Anpassbarkeit auf neue Normanforderungen ermöglicht werden, wie beispielsweise auf neue Brandschutzverordnungen und/oder auf neue Flammschutzverordnungen. Insbesondere aufgrund der, insbesondere zumindest zwei, Materiallagen, kann insbesondere ein besonders stabiles Ventilelement bereitgestellt werden, welches insbesondere unter Einfluss von Schäumdruck, der insbesondere durch in dem Isolationsraum befindliches Isolationsmaterial hervorgerufen sein könnte, besonders geringe Verformungen aufweist, wodurch insbesondere ein Ausschäumen und/oder ein Austreten von Isolationsmaterial aus der Eintrittsöffnung gezielt und/oder optimal verhindert werden kann.

Unter einer "Haushaltskältegerätevorrichtung" soll insbesondere zumindest ein Teil, insbesondere eine Unterbaugruppe, eines Haushaltskältegeräts verstanden werden, und zwar insbesondere vor dem Einfüllen und/oder Ausschäumen mit Isolationsmaterial. Besonders vorteilhaft ist ein Haushaltskältegerät dazu vorgesehen, in einem Betriebszustand Kühlgut, insbesondere Lebensmittel wie beispielsweise Getränke, Fleisch, Fisch, Milch und/oder Milchprodukte, zu kühlen, insbesondere um eine längere Haltbarkeit der Kühlgüter zu bewirken. Bei dem Haushaltskältegerät kann es sich insbesondere um eine Kühltruhe und/oder um eine Gefriertruhe handeln. Insbesondere alternativ oder zusätzlich, kann es sich bei dem Haushaltskältegerät vorteilhaft um einen Kühlschrank und/oder Gefrierschrank handeln.

Unter einem "Korpus" soll insbesondere eine Einheit verstanden werden, welche den Isolationsraum wenigstens teilweise und, insbesondere zusätzlich zu dem Isolationsraum, insbesondere zumindest einen Kälteraum wenigstens teilweise begrenzt und welche insbesondere in einem Betriebszustand einen Teil, insbesondere einen Großteil, einer äußeren Begrenzung, insbesondere eines Gehäuses, vorteilhaft eines Haushaltskältegerätegehäuses, ausbildet.

Unter der Wendung, dass ein Objekt einen Raum "wenigstens teilweise" begrenzt, soll insbesondere verstanden werden, dass das Objekt den Raum alleine begrenzt und/oder dass das Objekt den Raum gemeinsam mit zumindest einer weiteren Einheit begrenzt.

Der Korpus begrenzt insbesondere den Isolationsraum wenigstens zu einem Großteil. Beispielsweise könnte der Korpus den Isolationsraum alleine begrenzen. Vorteilhaft begrenzt der Korpus den Isolationsraum gemeinsam mit zumindest einer weiteren Einheit, wie beispielsweise gemeinsam mit der Ventileinheit.

Der Korpus könnte beispielsweise zumindest einen Kälteraum wenigstens teilweise und vorteilhaft wenigstens zu einem Großteil definieren und/oder begrenzen. Beispielsweise könnte der Korpus den Kälteraum gemeinsam mit zumindest einem weiteren Korpus begrenzen. Der Korpus könnte beispielsweise ein Gerätekorpus und der weitere Korpus ein Gerätetürkorpus sein. Beispielsweise alternativ oder zusätzlich, könnte der Korpus könnte beispielsweise ein Gerätetürkorpus und der weitere Korpus ein Gerätekorpus sein. Der Kälteraum ist insbesondere zu einer Lagerung und/oder Aufbewahrung zumindest eines Lebensmittels, insbesondere zum Zweck einer Kühlung des Lebensmittels, vorgesehen.

Unter "wenigstens zu einem Großteil" soll insbesondere zu einem Anteil, insbesondere einem Massenanteil und/oder einem Volumenanteil, von mindestens 70 %, insbesondere von mindestens 80 %, vorteilhaft von mindestens 90 % und vorzugsweise von mindestens 95 % verstanden werden.

Unter einem "Betriebszustand" soll insbesondere ein Zustand verstanden werden, in welchem sich die Gerätetür, insbesondere der Gerätetürkorpus der Gerätetür, in einem geschlossenen Zustand befindet und an dem Korpus anliegt, wodurch der Korpus und die Gerätetür, insbesondere der Gerätetürkorpus der Gerätetür, den Kälteraum insbesondere wenigstens zu einem Großteil begrenzen und vorteilhaft, insbesondere vollständig, begrenzen. Insbesondere erfolgt in einem Betriebszustand eine ordnungsgemäße Kühlung von in dem Kälteraum angeordneten Lebensmitteln.

Die Haushaltskältegerätevorrichtung weist insbesondere zumindest einen Gerätekorpus auf. Der Gerätekorpus definiert und/oder begrenzt insbesondere zumindest einen Kälteraum insbesondere wenigstens teilweise und vorteilhaft wenigstens zu einem Großteil. Unter einem "Gerätekorpus" soll insbesondere eine Einheit verstanden werden, welche in einem Betriebszustand einen Teil, insbesondere einen Großteil, einer äußeren Begrenzung, insbesondere eines Gehäuses, vorteilhaft eines Haushaltskältegerätegehäuses, ausbildet und welche in einem Betriebszustand einen Teil, insbesondere einen Großteil, einer äußeren Begrenzung zumindest eines Kälteraums, insbesondere eines Kühlraums und/oder eines Gefrierraums, definiert und/oder begrenzt. Der Gerätekorpus begrenzt den Kälteraum in einem Betriebszustand insbesondere gemeinsam mit zumindest einem Gerätetürkorpus wenigstens zu einem Großteil und vorteilhaft vollständig. Insbesondere weist der Gerätekorpus zumindest eine Seitenwand, insbesondere zumindest zwei Seitenwände, und/oder zumindest eine Rückwand und/oder zumindest eine Deckenwand und/oder zumindest eine Bodenwand auf, welche in einem Betriebszustand gemeinsam mit dem Gerätetürkorpus den Kälteraum umschließen.

Insbesondere weist die Haushaltskältegerätevorrichtung zumindest eine Gerätetür auf, welche insbesondere zumindest einen Gerätetürkorpus aufweist. Unter einem "Gerätetürkorpus" soll insbesondere eine Einheit verstanden werden, welche in einem Betriebszustand beweglich und insbesondere schwenkbar relativ zu dem Gerätekorpus mit dem Gerätekorpus verbunden ist und welche insbesondere in einem Betriebszustand einen Teil einer äußeren Begrenzung, insbesondere eines Gehäuses, vorteilhaft eines Haushaltskältegerätegehäuses, ausbildet. Vorteilhaft bilden der Gerätekorpus und der Gerätetürkorpus in einem Betriebszustand gemeinsam die äußere Begrenzung, insbesondere das Gehäuse, vorteilhaft das Haushaltskältegerätegehäuse, aus.

Beispielsweise könnte der Korpus ein Gerätekorpus sein und insbesondere einstückig und/oder identisch mit dem Gerätekorpus ausgebildet sein. Der Korpus, welcher insbesondere ein Gerätekorpus sein könnte, könnte beispielsweise in einem Betriebszustand die äußere Begrenzung, insbesondere eines Gehäuses, vorteilhaft eines Haushaltskältegerätegehäuses, wenigstens zu einem Großteil ausbilden.

Beispielsweise alternativ oder zusätzlich, könnte der Korpus beispielsweise ein Gerätetürkorpus sein und insbesondere einstückig und/oder identisch mit dem Gerätetürkorpus ausgebildet sein. Der Korpus, welcher insbesondere ein Gerätetürkorpus sein könnte, könnte beispielsweise in einem Betriebszustand die äußere Begrenzung, insbesondere eines Gehäuses, vorteilhaft eines Haushaltskältegerätegehäuses, wenigstens teilweise ausbilden.

Unter einem "Isolationsraum" soll insbesondere ein räumlicher Bereich verstanden werden, welcher zu einem Einfüllen und/oder Bevorraten von Isolationsmaterial, insbesondere zum Zweck einer thermischen Isolation zumindest eines von dem Korpus wenigstens teilweise begrenzten Kälteraums, vorgesehen ist. In einem Betriebszustand ist der Isolationsraum insbesondere wenigstens zu einem Großteil und vorteilhaft vollständig mit Isolationsmaterial gefüllt, insbesondere zum Zweck einer thermischen Isolation zumindest eines von dem Korpus wenigstens teilweise begrenzten Kälteraums.

Beispielsweise könnte der Korpus zumindest zwei, insbesondere zumindest drei, vorteilhaft zumindest vier und vorzugsweise mehrere Isolationsräume aufweisen, welche insbesondere wenigstens teilweise benachbart zueinander angeordnet sein könnten und welche sich insbesondere über eine, insbesondere gesamte, Ausdehnung des Korpus erstrecken könnten. Vorteilhaft weist der Korpus, insbesondere genau, einen, vorteilhaft einzigen, Isolationsraum auf, welcher sich insbesondere über eine, insbesondere gesamte, Ausdehnung des Korpus erstreckt.

Unter einer "Einfüllöffnung" soll insbesondere eine Öffnung verstanden werden, welche insbesondere zu einem Einführen zumindest eines Einfüllwerkzeugs und zu einem Einfüllen von Isolationsmaterial vorgesehen ist. Insbesondere nimmt die Einfüllöffnung bei einem Einfüllen von Isolationsmaterial zumindest einen Teil des Einfüllwerkzeugs auf. Unter einer "Öffnung" soll insbesondere eine Ausnehmung und/oder eine Aussparung verstanden werden. Beispielsweise könnte der Korpus, insbesondere pro Isolationsraum, insbesondere zumindest zwei, vorteilhaft zumindest drei, besonders vorteilhaft zumindest vier, vorzugsweise zumindest fünf und besonders bevorzugt mehrere Einfüllöffnungen aufweisen. Der Korpus weist, insbesondere pro Isolationsraum, insbesondere zumindest eine und vorteilhaft genau eine Einfüllöffnung auf.

Unter einer "Ventileinheit" soll insbesondere eine Einheit verstanden werden, welche, insbesondere mittels des Ventilelements, zu einem wenigstens teilweisen Öffnen der Einfüllöffnung, insbesondere zum Zweck eines Einfüllens von Isolationsmaterial in den Isolationsraum, und/oder zu einem Verschließen der Einfüllöffnung, insbesondere zum Zweck eines Verhinderns eines Austretens von Isolationsmaterial aus dem Isolationsraum, vorgesehen ist.

Das Ventilelement könnte beispielsweise auf einer dem Isolationsraum, und insbesondere zusätzlich dem Kälteraum, abgewandten Seite des Korpus angeordnet sein. Vorteilhaft ist das Ventilelement auf einer dem Isolationsraum zugewandten Seite des Korpus, und insbesondere zusätzlich auf einer dem Kälteraum abgewandten Seite des Korpus, angeordnet, wodurch insbesondere eine einfache Zugänglichkeit des Ventilelements und/oder ein einfaches Einfüllen von Isolationsmaterial in den Isolationsraum erzielt werden kann.

Unter der Wendung, dass das Ventilelement "wenigstens abschnittsweise" beweglich relativ zu dem Korpus an dem Korpus gelagert ist, soll insbesondere verstanden werden, dass das Ventilelement zumindest einen Abschnitt aufweist, welcher beweglich relativ zu dem Korpus an dem Korpus gelagert ist, und insbesondere zusätzlich zu dem Abschnitt zumindest einen Abschnitt aufweisen könnte, welcher unbeweglich relativ zu dem Korpus an dem Korpus gelagert ist. Der Abschnitt und der weitere Abschnitt könnten sich insbesondere an einander gegenüberliegenden Endbereichen des Ventilelements befinden. Vorteilhaft könnte das Ventilelement mittels des weiteren Abschnitts an dem Korpus befestigt sein.

Der Korpus und/oder das Ventilelement könnte beispielsweise zu einer Herstellung mittels Plattenzuschnitt vorgesehen und insbesondere mittels Plattenzuschnitt hergestellt sein, wodurch insbesondere besonders geringe Kosten und/oder eine einfache Herstellung erreicht werden könnte.

Unter einer von der ersten Materiallage "verschiedenen" zweiten Materiallage soll insbesondere verstanden werden, dass es sich bei den beiden Materiallagen um verschiedene Bauteile und/oder Körper handelt, welche insbesondere in einem Betriebszustand aneinander gekoppelt sind.

Insbesondere weist zumindest eine der Materiallagen und vorteilhaft die Materiallagen über eine Ausdehnung der entsprechenden Materiallage hinweg eine insbesondere wenigstens im Wesentlichen konstante und vorteilhaft konstante Dichte auf. Zumindest eine der Materiallagen und vorteilhaft die Materiallagen besteht insbesondere über eine Ausdehnung der entsprechenden Materiallage hinweg aus dem gleichen Material und/oder aus den gleichen Materialien.

Zumindest eine der Materiallagen und vorteilhaft die Materiallagen ist insbesondere flächenartig ausgebildet und weist insbesondere eine flächenartige Gestalt auf. Insbesondere weist zumindest eine der Materiallagen und vorteilhaft die Materiallagen eine Dicke auf, welche wesentlich kleiner ist als eine Längserstreckung der entsprechenden Materiallage und/oder als eine Quererstreckung der entsprechenden Materiallage. Die Längserstreckung einer Materiallage und/oder die Quererstreckung einer Materiallage weist beispielsweise einen Wert von mindestens 1,5-mal, insbesondere von mindestens 2-mal, vorteilhaft von mindestens 5-mal, besonders vorteilhaft von mindestens 10-mal, vorzugsweise von mindestens 15-mal und besonders bevorzugt von mindestens 20-mal eines Werts der Dicke der entsprechenden Materiallage auf.

Unter der Wendung "zumindest eine der Materiallagen" soll insbesondere die erste Materiallage und/oder die zweite Materiallage verstanden werden.

Unter einer "Längserstr eckung" eines Objekts soll insbesondere eine Länge einer längsten Seite eines kleinsten gedachten geometrischen Quaders verstanden werden, welcher das Objekt gerade noch vollständig umschließt. Unter einer "Quererstreckung" eines Objekts soll insbesondere eine Länge einer zweitlängsten Seite eines kleinsten gedachten geometrischen Quaders verstanden werden, welcher das Objekt gerade noch vollständig umschließt. Unter einer "Dicke" eines Objekts soll insbesondere eine Länge einer kürzeste Seite eines kleinsten gedachten geometrischen Quaders verstanden werden, welcher das Objekt gerade noch vollständig umschließt. Insbesondere sind die Dicke und die Längserstreckung senkrecht zueinander ausgerichtet. Die Quererstreckung und die Dicke sind insbesondere senkrecht zueinander ausgerichtet. Insbesondere sind die Quererstreckung und die Längserstreckung senkrecht zueinander ausgerichtet.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die erste Materiallage und die zweite Materiallage miteinander verbunden sind. Beispielsweise könnten die erste Materiallage und die zweite Materiallage an zumindest zwei, insbesondere an zumindest drei, vorteilhaft an zumindest fünf, besonders vorteilhaft an zumindest zehn, vorzugsweise an zumindest fünfzehn und besonders bevorzugt an einer Vielzahl an Punkten miteinander verbunden sein. Vorzugsweise sind die erste Materiallage und die zweite Materiallage flächig miteinander verbunden. Das Ventilelement weist insbesondere zumindest eine Verbindungseinheit auf, welche die erste Materiallage und die zweite Materiallage miteinander verbindet. Die Verbindungseinheit stellt insbesondere eine mechanische Verbindung zwischen der ersten Materiallage und der zweiten Materiallage her und bewirkt insbesondere eine Kopplung zwischen der ersten Materiallage und der zweiten Materiallage. Dadurch kann insbesondere eine kompakte und/oder stabile Ausgestaltung bereitgestellt werden.

Beispielsweise könnten die erste Materiallage und die zweite Materiallage kraftschlüssig und/oder formschlüssig miteinander verbunden sein. Die Verbindungseinheit könnte die erste Materiallage und die zweite Materiallage insbesondere kraftschlüssig und/oder formschlüssig miteinander verbinden. Vorzugsweise sind die erste Materiallage und die zweite Materiallage stoffschlüssig miteinander verbunden. Die Verbindungseinheit verbindet die erste Materiallage und die zweite Materiallage insbesondere stoffschlüssig miteinander. Unter zwei "stoffschlüssig" miteinander verbundenen Objekten sollen insbesondere zwei Objekte verstanden werden, welche miteinander verklebt und/oder aneinander angespritzt und/oder koextrudiert und/oder durch ein Zwei-Komponenten-Spritzverfahren miteinander verbunden sind. Insbesondere sind zwei stoffschlüssig miteinander verbundene Objekte ausschließlich unter Zerstörung und/oder Beschädigung zumindest eines der Objekte voneinander trennbar. Besonders vorteilhaft sind die erste Materiallage und die zweite Materiallage mittels beidseitigem Klebeband miteinander verbunden. Die Verbindungseinheit weist insbesondere zumindest ein beidseitiges Klebeband auf und verbindet insbesondere die erste Materiallage und die zweite Materiallage mittels des beidseitigen Klebebands miteinander. Dadurch kann insbesondere eine besonders hohe Stabilität erzielt werden. Insbesondere kann eine einfache und/oder kostengünstige Herstellung erreicht werden.

Weiterhin wird vorgeschlagen, dass die erste Materiallage und die zweite Materiallage wenigstens im Wesentlichen geometrisch identisch, und insbesondere geometrisch identisch, ausgebildet sind. Unter der Wendung, dass die erste Materiallage und die zweite Materiallage "geometrisch identisch" ausgebildet sind, soll insbesondere verstanden werden, dass die erste Materiallage und die zweite Materiallage gleiche und/oder identische geometrische Eigenschaften aufweisen. Beispielsweise könnte die geometrische Eigenschaft eine Flächenerstreckung und/oder eine Längserstreckung und/oder eine Quererstreckung und/oder eine Dicke sein. Die erste Materiallage und die zweite Materiallage könnten beispielsweise wenigstens im Wesentlichen identische Flächenerstreckungen und/oder wenigstens im Wesentlichen identische Dicken aufweisen. Unter der Wendung, dass die erste Materiallage und die zweite Materiallage "wenigstens im Wesentlichen" geometrisch identisch ausgebildet sind, soll insbesondere verstanden werden, dass die erste Materiallage in Bezug auf eine bestimmte geometrische Eigenschaft einen ersten Wert und die zweite Materiallage in Bezug auf die bestimmte geometrische Eigenschaft einen zweiten Wert aufweisen, von welchen ein Quotient eines kleineren der Werte und eines größeren der Werte mindestens 0,5, insbesondere mindestens 0,7, vorteilhaft mindestens 0,8, besonders vorteilhaft mindestens 0,9, vorzugsweise mindestens 0,95 und besonders bevorzugt mindestens 0,98 beträgt. Dadurch kann insbesondere ein optimiertes Ventilelement bereitgestellt werden, welches insbesondere die Einfüllöffnung in einem Betriebszustand optimal abdichtet und/oder welches insbesondere einfach zu handhaben und/oder einfach herzustellen ist.

Beispielsweise könnten die erste Materiallage und die zweite Materiallage insbesondere wenigstens teilweise und vorteilhaft wenigstens zu einem Großteil aus dem gleichen und/oder aus identischem Material bestehen. Vorzugsweise bestehen die erste Materiallage und die zweite Materiallage wenigstens zu einem Großteil aus verschiedenen Materialien. Beispielsweise könnte zumindest eine der Materiallage wenigstens zu einem Großteil aus zumindest einem weicheren Material ausgebildet sein als zumindest eine weitere der Materiallagen, wodurch insbesondere eine optimierte Abdichtung der Einfüllöffnung erzielt werden könnte. Dadurch kann insbesondere eine besonders hohe Flexibilität und/oder eine besonders hohe Gestaltungsfreiheit erzielt werden. Insbesondere kann durch Wahl geeigneter Materialien für die Materiallagen ein optimiertes und/oder an bestimmte Gegebenheiten angepasstes Ventilelement bereitgestellt werden, wodurch insbesondere unabhängig von bestimmten Gegebenheiten und/oder von bestimmten Ausgestaltungen eine optimale Abdichtung der Einfüllöffnung gewährleistet werden kann.

Zudem wird vorgeschlagen, dass zumindest eine der Materiallagen wenigstens zu einem Großteil aus zumindest einem Kunststoff besteht. Beispielsweise könnte die erste Materiallage wenigstens zu einem Großteil aus zumindest einem ersten Kunststoff und die zweite Materiallage wenigstens zu einem Großteil aus zumindest einem von dem ersten Kunststoff verschiedenen zweiten Kunststoff bestehen. Bei dem Kunststoff könnte es sich beispielsweise um zumindest ein Polymer und/oder um zumindest einen Thermoplasten handeln, wie beispielsweise um Polystyrol. Dadurch kann insbesondere eine kostengünstige Ausgestaltung erzielt werden.

Ferner wird vorgeschlagen, dass zumindest eine der Materiallagen wenigstens zu einem Großteil aus zumindest einem Flammschutzmaterial besteht. Beispielsweise könnte die erste Materiallage wenigstens zu einem Großteil aus zumindest einem ersten Flammschutzmaterial und die zweite Materiallage wenigstens zu einem Großteil aus zumindest einem von dem ersten Flammschutzmaterial verschiedenen zweiten Flammschutzmaterial bestehen. Bei dem Flammschutzmaterial könnte es sich beispielsweise um zumindest einen Kunststoff, welcher flammschutzklassifiziert ist, handeln. Beispielsweise könnte das Flammschutzmaterial ein Material sein, welches bei Glasfasermatten und/oder bei Brandschutzmatten und/oder bei Feuerlöschdecken zum Einsatz kommt.. Bei dem Flammschutzmaterial könnte es sich beispielsweise um zumindest eine Glasfasermatte und/oder um zumindest eine Brandschutzmatte und/oder um zumindest eine Feuerlöschdecke handeln. Dadurch können insbesondere gängige Normanforderungen erfüllt und/oder ein besonders geringes Risiko eines Brands erzielt werden.

Vorteilhaft könnte zumindest eine der Materiallage wenigstens zu einem Großteil aus zumindest einem flexiblen Material und zumindest eine weitere der Materiallage wenigstens zu einem Großteil aus zumindest einem Flammschutzmaterial bestehen, wodurch insbesondere ein besonders vorteilhaftes und/oder optimiertes Ventilelement bereitgestellt werden könnte. Das Ventilelement könnte beispielsweise zumindest eine als Dichtschicht ausgebildete Materiallage und zumindest eine als Flammschutzschicht ausgebildete Materiallage aufweisen, wodurch insbesondere ein an sämtliche Bedürfnisse optimal angepasstes Ventilelement bereitgestellt werden könnte.

Zumindest eine der Materiallagen und insbesondere die Materiallagen, könnte beispielsweise, vorteilhaft jeweils, eine Dicke von maximal 5 mm, insbesondere von maximal 4 mm, vorteilhaft von maximal 3,5 mm, besonders vorteilhaft von maximal 3 mm, vorzugsweise von maximal 2,5 mm und besonders bevorzugt von maximal 2 mm aufweisen. Vorzugsweise wird vorgeschlagen, dass zumindest eine der Materiallagen und insbesondere die Materiallagen, vorteilhaft jeweils, eine Dicke von maximal 0,9 mm, insbesondere von maximal 0,8 mm, vorteilhaft von maximal 0,7 mm, besonders vorteilhaft von maximal 0,6 mm, vorzugsweise von maximal 0,55 mm und besonders bevorzugt von maximal 0,5 mm aufweist. Insbesondere weist zumindest eine der Materiallagen und insbesondere die Materiallagen, vorteilhaft jeweils, eine Dicke von mindestens 0,001 mm, insbesondere von mindestens 0,01 mm, vorteilhaft von mindestens 0,05 mm, besonders vorteilhaft von mindestens 0,1 mm, vorzugsweise von mindestens 0,2 mm und besonders bevorzugt von mindestens 0,3 mm auf. Dadurch kann insbesondere ein optimaler Kompromiss zwischen einer hohen Stabilität und einer hohen Flexibilität erzielt werden, wodurch das Ventilelement insbesondere einerseits einfach biegbar ist und andererseits besonders vorteilhaft selbsttätig einer Ruheposition des Ventilelements zustrebt. Insbesondere aufgrund einer geringen Dicke der Materiallage, vorteilhaft aufgrund geringer Dicken der Materiallagen, strebt das Ventilelement, insbesondere ausgehend von der Betriebsposition des Ventilelements, besonders schnell der Ruheposition des Ventilelements zu, wodurch insbesondere eine besonders schnelle Abdichtung der Einfüllöffnung bewirkt werden kann.

Insbesondere strebt das Ventilelement im Anschluss an eine Auslenkung des Ventilelements aus einer Ruheposition des Ventilelements in eine Betriebsposition des Ventilelements selbsttätig in die Ruheposition des Ventilelements zurück. Dadurch kann insbesondere ein besonders einfaches Einbringen von Isolationsmaterial in den Isolationsraum ermöglicht werden, wodurch insbesondere ein zeitsparenden und/oder kostengünstige und/oder einfache Herstellung ermöglicht werden kann.

Die Haushaltskältegerätevorrichtung könnte beispielsweise zumindest eine Befestigungseinheit aufweisen, welche das Ventilelement in einem Betriebszustand lösbar, beispielsweise werkzeuglos lösbar, mit dem Korpus verbindet und insbesondere an den Korpus anbindet. Unter einer "lösbaren" Verbindung soll insbesondere eine werkzeuglos lösbare Verbindung und/oder eine unter Werkzeugeinsatz zerstörungsfrei lösbare Verbindung verstanden werden. Die Befestigungseinheit könnte das Ventilelement in einem Betriebszustand beispielsweise kraftschlüssig und/oder formschlüssig mit dem Korpus verbinden. Beispielsweise könnte die Befestigungseinheit das Ventilelement in einem Betriebszustand mittels zumindest einer Rastverbindung und/oder mittels zumindest einer Klemmverbindung und/oder mittels zumindest einer Steckverbindung und/oder mittels zumindest einer durch Verriegelung bewirkten Verbindung und/oder mittels zumindest einer durch Einschieben bewirkten Verbindung und/oder mittels zumindest einer durch Knopflöcher bewirkten Verbindung mit dem Korpus verbinden. Vorzugsweise weist die Haushaltskältegerätevorrichtung zumindest eine Befestigungseinheit auf, welche das Ventilelement in einem Betriebszustand fest mit dem Korpus verbindet und insbesondere an den Korpus anbindet. Unter einer "festen" Verbindung soll insbesondere eine ausschließlich unter Werkzeugeinsatz zerstörungsfrei lösbare Verbindung und/oder eine ausschließlich durch Zerstörung und/oder Beschädigung zumindest eines an der Verbindung beteiligten Komponente, wie insbesondere des Ventilelements und/oder des Korpus, verstanden werden. Dadurch kann insbesondere eine hohe Stabilität erzielt werden. Insbesondere kann ein ungewolltes Lösen des Ventilelements von dem Korpus vermieden werden, wodurch insbesondere eine langlebige und/oder funktionstüchtige Ausgestaltung bereitgestellt werden kann.

Weiterhin wird vorgeschlagen, dass die Haushaltskältegerätevorrichtung zumindest eine und insbesondere zumindest die Befestigungseinheit aufweist, welche das Ventilelement in einem Betriebszustand einseitig mit dem Korpus verbindet und insbesondere an den Korpus anbindet. In einem Betriebszustand verbindet die Befestigungseinheit insbesondere zumindest einen und vorteilhaft den Abschnitt des Ventilelements mit dem Korpus und lässt insbesondere zumindest einen weiteren und vorteilhaft den weiteren Abschnitt des Ventilelements unverbunden mit dem Korpus. Der Abschnitt ist insbesondere in zumindest einem Endbereich des Ventilelements angeordnet und bildet insbesondere den Endbereich des Ventilelements aus. Der weitere Abschnitt ist insbesondere in zumindest einem dem Endbereich gegenüberliegenden weiteren Endbereich des Ventilelements angeordnet und bildet insbesondere den weiteren Endbereich des Ventilelements aus. Dadurch kann insbesondere eine ein einfaches und/oder schnelles und/oder unkompliziertes Einfüllen von Isolationsmaterial in den Isolationsraum ermöglicht werden, wodurch insbesondere eine kostengünstige Herstellung erreicht werden kann. Insbesondere kann eine einfache Montage erzielt werden, welche beispielsweise je nach Ausführungsform und/oder Gerätemodell besonders einfach sein könnte.

Die Befestigungseinheit könnte das Ventilelement in einem Betriebszustand beispielsweise über zumindest ein Gelenk mit dem Korpus verbinden. Das Gelenk könnte beispielsweise Teil der Befestigungseinheit sein. Beispielsweise könnte das Gelenk und das Ventilelement voneinander verschieden sein. Insbesondere alternativ, könnte das Gelenk beispielsweise durch das Ventilelement gebildet sein. Vorzugsweise weist die Haushaltskältegerätevorrichtung zumindest eine und insbesondere zumindest die Befestigungseinheit auf, welche das Ventilelement in einem Betriebszustand gelenkfrei mit dem Korpus verbindet und insbesondere an den Korpus anbindet. Unter einer "gelenkfreien" Verbindung soll insbesondere eine Verbindung unter Vermeidung von Gelenken und/oder eine Verbindung verstanden werden, welche frei von Gelenken ist. Dadurch kann das Ventilelement insbesondere mittels einer Verbindung mit dem Korpus verbunden werden, welche eine besonders geringe Wahrscheinlichkeit einer Beschädigung und/oder eines Defekts aufweist, wodurch insbesondere eine langlebige Ausgestaltung erzielt werden kann.

Zudem wird vorgeschlagen, dass der Korpus ein Gerätekorpus ist und insbesondere als ein Gerätekorpus ausgebildet ist. Insbesondere weist der Korpus zumindest einen und vorteilhaft zumindest den Gerätekorpus auf. Dadurch kann insbesondere ein besonders effizienter Gerätekorpus bereitgestellt werden, dessen Isolationsraum insbesondere in einfacher Art und Weise mit Isolationsmaterial gefüllt und/oder besonders effektiv gegen einen Austritt von Isolationsmaterial aus der Eintrittsöffnung geschützt werden kann.

Beispielsweise könnte der Korpus, insbesondere zusätzlich zu dem Gerätekorpus, zumindest einen und vorteilhaft zumindest den Gerätetürkorpus aufweisen. Vorzugsweise ist der Korpus ein Gerätetürkorpus und insbesondere als ein Gerätetürkorpus ausgebildet. Dadurch kann insbesondere eine optimal isolierte Gerätetür bereitgestellt werden.

Eine besonders optimierte und/oder vorteilhafte Ausgestaltung kann insbesondere erreicht werden durch ein Haushaltskältegerät mit zumindest einer erfindungsgemäßen Haushaltskältegerätevorrichtung, welche insbesondere ausgeschäumt ist. Unter "ausgeschäumt" ist hierbei zu verstehen, dass der Isolationsraum teilweise oder vollständig mit Isolationsmaterial, z.B. Polyurethanschaum, befüllt ist.

Eine besonders einfache und/oder unkomplizierte und/oder kostengünstige Herstellung kann insbesondere erreicht werden durch ein Verfahren zu einer Herstellung einer erfindungsgemäßen Haushaltskältegerätevorrichtung mit zumindest einem Korpus, welcher zumindest einen Isolationsraum wenigstens teilweise begrenzt und welcher zumindest eine Einfüllöffnung zu einem Einfüllen von Isolationsmaterial in den Isolationsraum aufweist, und mit zumindest einer Ventileinheit, welche zumindest ein Ventilelement aufweist, welches wenigstens abschnittsweise beweglich relativ zu dem Korpus an dem Korpus gelagert ist, wobei das Ventilelement zumindest eine erste Materiallage und zumindest eine von der ersten Materiallage verschiedene zweite Materiallage aufweist, welche miteinander verbunden werden.

Die Haushaltskältegerätevorrichtung soll hierbei nicht auf die oben beschriebene Anwendung und Ausführungsform beschränkt sein. Insbesondere kann die Haushaltskältegerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Haushaltskältegerät mit einer Haushaltskältegerätevorrichtung in einer schematischen perspektivischen Darstellung,
- Fig. 2: einen Ausschnitt eines Korpus der Haushaltskältegerätevorrichtung und eine Ventileinheit sowie eine Befestigungseinheit der Haushaltskältegerätevorrichtung in einer schematischen Schnittdarstellung,
- Fig. 3: einen Ausschnitt des Korpus und der Ventileinheit sowie die Befestigungseinheit in einer schematischen perspektivischen Darstellung,
- Fig. 4: ein Ventilelement der Ventileinheit und die Befestigungseinheit in einer schematischen perspektivischen Darstellung,
- Fig. 5: einen vergrößert dargestellten Ausschnitt aus Figur 4,
- Fig. 6: einen Ausschnitt des Korpus und der Ventileinheit sowie die Befestigungseinheit und ein Einfüllwerkzeug in einer schematischen Schnittdarstellung,
- Fig. 7: ein Diagramm eines Verfahren zu einer Herstellung der Haushaltskältegerätevorrichtung einer schematischen Darstellung,
- Fig. 8: einen Ausschnitt eines Korpus einer Haushaltskältegerätevorrichtung und eine Ventileinheit sowie eine Befestigungseinheit der Haushaltskältegerätevorrichtung gemäß der Erfindung in einer schematischen perspektivischen Darstellung,
- Fig. 9: einen Ausschnitt eines Korpus einer alternativen Haushaltskältegerätevorrichtung und eine Ventileinheit sowie eine Befestigungseinheit der alternativen Haushaltskältegerätevorrichtung in einer schematischen perspektivischen Darstellung und
- Fig. 10: einen Ausschnitt eines Korpus einer alternativen Haushaltskältegerätevorrichtung und eine Ventileinheit sowie eine Befestigungseinheit der alternativen Haushaltskältegerätevorrichtung in einer schematischen perspektivischen Darstellung.

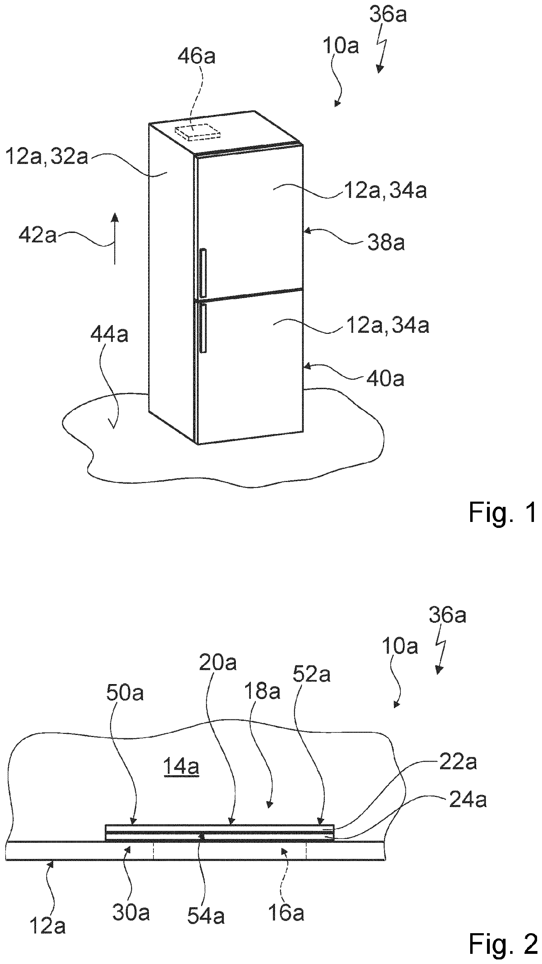

Figur 1 zeigt beispielhaft ein Haushaltskältegerät 36a, welches eine Haushaltskältegerätevorrichtung 10a aufweist. Beispielsweise könnte das Haushaltskältegerät 36a als eine Kühltruhe und/oder als eine Gefriertruhe und/oder als eine Kühl-Gefrier-Kombinationstruhe ausgebildet sein. Im vorliegenden Ausführungsbeispiel ist das Haushaltskältegerät 36a insbesondere als ein Kühlgerät und als ein Gefriergerät, insbesondere als ein Kühl-Gefrier-Kombinationsgerät, ausgebildet.

Die Haushaltskältegerätevorrichtung 10a weist insbesondere zumindest einen und vorteilhaft genau einen Gerätekorpus 32a auf. Der Gerätekorpus 32a definiert insbesondere wenigstens teilweise einen Kälteraum (nicht dargestellt). Der Kälteraum ist insbesondere als ein Kühlraum ausgebildet.

Insbesondere weist die Haushaltskältegerätevorrichtung 10a zumindest eine und vorteilhaft genau eine Gerätetür 38a auf. Die Gerätetür 38a ist insbesondere schwenkbar relativ zu dem Gerätekorpus 32a gelagert. In einem geschlossenen Zustand der Gerätetür 38a, welcher insbesondere in Figur 1 dargestellt ist, verschließt die Gerätetür 18a insbesondere den Kälteraum.

Der Gerätekorpus 16a definiert insbesondere wenigstens teilweise einen weiteren Kälteraum (nicht dargestellt). Der weitere Kälteraum ist insbesondere als ein Gefrierraum ausgebildet.

Insbesondere weist die Haushaltskältegerätevorrichtung 10a zumindest eine und vorteilhaft genau eine weitere Gerätetür 40a auf. Die weitere Gerätetür 40a ist insbesondere schwenkbar relativ zu dem Gerätekorpus 32a gelagert. In einem geschlossenen Zustand der weiteren Gerätetür 40a verschließt die weitere Gerätetür 40a insbesondere den weiteren Kälteraum.

Der weitere Kälteraum ist in einer Einbaulage insbesondere bezüglich einer Vertikalrichtung 42a unterhalb des Kälteraums angeordnet. In einer Einbaulage ist der Gerätekorpus 32a insbesondere auf einer Aufstellfläche 44a aufgestellt. Beispielsweise könnte die Aufstellfläche durch zumindest einen Boden und/oder durch zumindest einen Fußboden und/oder durch zumindest einen Untergrund gebildet sein. Die Aufstellfläche 44a ist im vorliegenden Ausführungsbeispiel insbesondere durcheinen Fußboden, insbesondere eines Zimmers, vorteilhaft eines Hauses, gebildet. Die Vertikalrichtung 42a ist insbesondere wenigstens im Wesentlichen senkrecht und vorteilhaft senkrecht zu der Aufstellfläche 44a ausgerichtet.

Die Gerätetür 38a und die weitere Gerätetür 40a sind insbesondere wenigstens im Wesentlichen identisch und/oder analog zueinander aufgebaut. Daher wird im Folgenden stellvertretend für die Gerätetür 38a und die weitere Gerätetür 40a beispielhaft lediglich die Gerätetür 38a beschrieben.

Die Gerätetür 38a weist insbesondere zumindest einen und vorteilhaft genau einen Gerätetürkorpus 34a auf. Der Gerätetürkorpus 34a definiert insbesondere eine äußere Gestalt und/oder Form der Gerätetür 38a wenigstens zu einem Großteil. Insbesondere bildet der Gerätetürkorpus 34a eine äußere Gestalt und/oder Form der Gerätetür 38a wenigstens zu einem Großteil aus.

Die Haushaltskältegerätevorrichtung 10a weist insbesondere zumindest eine und vorteilhaft genau eine Steuereinheit 46a auf. Die Steuereinheit 46a steuert und/oder regelt in einem Betriebszustand insbesondere zumindest eine Gerätefunktion und/oder zumindest eine Gerätehauptfunktion, insbesondere des Haushaltsgeräts 36a.

Die Haushaltskältegerätevorrichtung 10a weist insbesondere zumindest einen Korpus 12a auf (vgl. Figuren 1 bis 3). Der Korpus 12a könnte beispielsweise ein Gerätetürkorpus 34a sein und insbesondere als Gerätetürkorpus 34a ausgebildet sein. Insbesondere könnten der Korpus 12a und der Gerätetürkorpus 34a, insbesondere der Gerätetür 38a, identisch sein. Der Korpus 12a könnte, insbesondere alternativ oder zusätzlich, beispielsweise ein Gerätekorpus 32a sein und insbesondere als Gerätekorpus 32a ausgebildet sein. Insbesondere könnten der Korpus 12a und der Gerätekorpus 32a identisch sein.

Insbesondere in Bezug auf für die vorliegende Erfindung wesentlichen Merkmale verläuft eine Beschreibung des Korpus 12a unabhängig davon identisch, ob der Korpus 12a ein Gerätetürkorpus 34a oder ein Gerätekorpus 32a ist. Daher wird im Folgenden beispielhaft lediglich der Korpus 12a beschrieben, und zwar stellvertretend sowohl für einen Korpus 12a, welcher ein Gerätetürkorpus 34a ist, als auch für einen Korpus 12a, welcher ein Gerätekorpus 32a ist.

Der Korpus 12a begrenzt zumindest einen Isolationsraum 14a insbesondere wenigstens teilweise und vorteilhaft wenigstens zu einem Großteil (vgl. Figur 2). Insbesondere begrenzt der Korpus 12a den Isolationsraum 14a in einem Betriebszustand gemeinsam mit zumindest einer Ventileinheit 18a insbesondere vollständig.

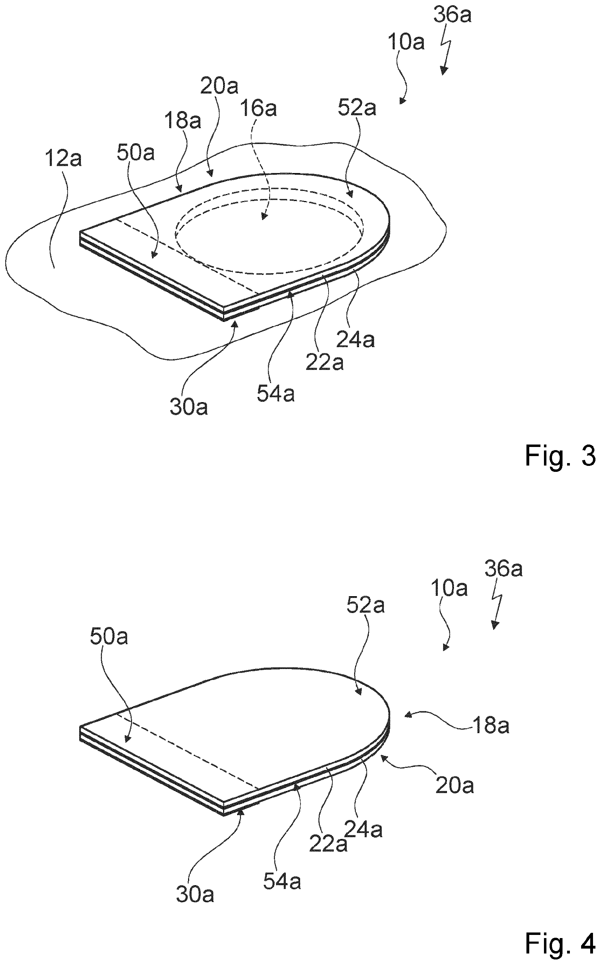

Der Korpus 12a weist insbesondere zumindest eine Einfüllöffnung 16a zu einem Einfüllen von Isolationsmaterial in den Isolationsraum 14a auf (vgl. Figuren 2 und 3). Die Einfüllöffnung 16a ist insbesondere zu einem Einführen eines Einfüllwerkzeugs 48a vorgesehen. Insbesondere ist die Einfüllöffnung 16a zu einem Einfüllen von Isolationsmaterial in den Isolationsraum 14a, vorteilhaft mittels des Einfüllwerkzeugs 48a, vorgesehen.

Das Isolationsmaterial ist insbesondere schaumartig und/oder als Schaum ausgebildet. Beispielsweise könnte es sich bei dem Isolationsmaterial um Polyurethan, welches insbesondere als PUR abgekürzt ist, handeln. Durch das Einfüllen von Isolationsmaterial in den Isolationsraum 14a kann insbesondere eine besonders gute Isolierung, insbesondere des Korpus 12a, und/oder eine besonders hohe Stabilität des Korpus 12a und/oder des Haushaltskältegeräts 36a, erzielt werden. Beispielsweise könnte das Einfüllen von Isolationsmaterial in den Isolationsraum 14a mittels zumindest einer Schäumungsanlage durchgeführt werden, welche sich insbesondere in Abhängigkeit von gegebenen Umständen, wie beispielsweise einer Ausgestaltung und/oder eines Typs des Haushaltskältegeräts 36a, unterscheiden könnten.

Die Haushaltskältegerätevorrichtung 10a weist insbesondere zumindest eine und vorteilhaft genau eine Ventileinheit 18a, insbesondere zumindest die und vorteilhaft genau die Ventileinheit 18a, auf (vgl. Figuren 2 bis 6). Die Ventileinheit 18a weist im vorliegenden Ausführungsbeispiel insbesondere zumindest ein und vorteilhaft genau ein Ventilelement 20a auf.

Das Ventilelement 20a ist in einem Betriebszustand insbesondere mit dem Korpus 12a verbunden. Insbesondere ist das Ventilelement 20a wenigstens abschnittsweise beweglich relativ zu dem Korpus 12a an dem Korpus 12a gelagert. Das Ventilelement 20a weist insbesondere zumindest einen und vorteilhaft genau einen Abschnitt 50a auf, welcher unbeweglich relativ zu dem Korpus 12a gelagert und insbesondere mit dem Korpus 12a verbunden ist. Insbesondere zusätzlich zu dem Abschnitt 50a, weist das Ventilelement 20a insbesondere zumindest einen und vorteilhaft genau einen weiteren Abschnitt 52a auf, welcher beweglich relativ zu dem Korpus 12a gelagert ist.

Vorteilhaft ist das Ventilelement 20a schaumseitig mit dem Korpus 12a verbunden und vorteilhaft an dem Korpus 12a befestigt. Das Ventilelement 20a ist insbesondere auf einer dem Isolationsraum 14a zugewandten Seite mit dem Korpus 12a verbunden und vorteilhaft an dem Korpus 12a befestigt.

Insbesondere zu einer Befestigung des Ventilelements 20a an dem Korpus 12a, weist die Haushaltskältegerätevorrichtung 10a, insbesondere pro Ventilelement 20a, insbesondere zumindest eine und vorteilhaft genau eine Befestigungseinheit 30a auf (vgl. Figuren 3 bis 6). Die Befestigungseinheit 30a befestigt das Ventilelement insbesondere an dem Korpus 12a, und zwar insbesondere schaumseitig. In einem Betriebszustand ist die Befestigungseinheit 30a insbesondere wenigstens zu einem Großteil innerhalb des Isolationsraums 14a angeordnet.

Die Befestigungseinheit 30a verbindet in einem Betriebszustand das Ventilelement 20a insbesondere einseitig mit dem Korpus 12a. Insbesondere befestigt die Befestigungseinheit das Ventilelement 20a in einem Betriebszustand einseitig an dem Korpus 12a. Die Befestigungseinheit 30a verbindet insbesondere den Abschnitt 50a des Ventilelements 20a mit dem Korpus 12a und lässt insbesondere den weiteren Abschnitt 52a des Ventilelements 20a beweglich relativ zu dem Korpus 12a. In einem Betriebszustand wirkt die Befestigungseinheit 30a insbesondere direkt auf den Abschnitt 50a des Ventilelements 20a und den Korpus 12a ein.

Die Befestigungseinheit 30a verbindet in einem Betriebszustand das Ventilelement 20a insbesondere gelenkfrei mit dem Korpus 12a. Insbesondere ist in einem Betriebszustand eine Verbindung zwischen dem Ventilelement 20a und dem Korpus 12a frei von Gelenken, wodurch insbesondere eine geringe Anfälligkeit für Beschädigungen und/oder Defekte erreicht werden kann.

Die Befestigungseinheit 30a ist im vorliegenden Ausführungsbeispiel insbesondere wenigstens zu einem Großteil zwischen dem Ventilelement 20a und dem Korpus 12a, insbesondere zwischen dem Abschnitt 50a des Ventilelements 20a und dem Korpus 12a, angeordnet. Insbesondere verbindet die Befestigungseinheit 30a das Ventilelement 20a in einem Betriebszustand fest und vorteilhaft stoffschlüssig mit dem Korpus 12a. Beispielsweise könnte die Befestigungseinheit 30a das Ventilelement 20a mittels zumindest einer Klebeverbindung und/oder mittels zumindest einer Klebeschicht und/oder mittels beidseitigem Klebeband mit dem Korpus 12a verbinden.

Beispielsweise könnte die Verbindung des Ventilelements 20a mit dem Korpus 12a im Linientakt und/oder durch zumindest eine Vormontagegruppe an der Linie durchgeführt werden.

Das Ventilelement weist insbesondere zumindest eine und vorteilhaft genau eine erste Materiallage 20a auf. Insbesondere zusätzlich zu der ersten Materiallage 22a, weist das Ventilelement insbesondere zumindest eine und vorteilhaft genau eine zweite Materiallage 24a auf, welche von der ersten Materiallage 22a verschieden ist. Die Materiallagen 22a, 24a sind insbesondere als voneinander verschiedene und/oder separate Körper ausgebildet.

Insbesondere alternativ oder zusätzlich, könnte das Ventilelement 20a, insbesondere insgesamt, beispielsweise zumindest drei, insbesondere zumindest vier und vorteilhaft mehrere Materiallagen 22a, 24a, aufweisen. Im Folgenden werden stellvertretend und der Übersichtlichkeit halber beispielhaft lediglich die erste Materiallage 22a und die zweite Materiallage 24a beschrieben.

In einem Betriebszustand sind die erste Materiallage 22a und die zweite Materiallage 24a insbesondere miteinander verbunden. Vorteilhaft sind die erste Materiallage 22a und die zweite Materiallage 24a in einem Betriebszustand aneinander befestigt. Die erste Materiallage 22a und die zweite Materiallage 24a sind in einem Betriebszustand insbesondere stoffschlüssig miteinander verbunden und vorteilhaft stoffschlüssig aneinander befestigt. In einem Betriebszustand sind die erste Materiallage 22a und die zweite Materiallage 24a insbesondere mittels beidseitigem Klebeband miteinander verbunden und vorteilhaft aneinander befestigt.

Das Ventilelement 18a weist, insbesondere pro Ventilelement 20a, insbesondere zumindest eine und vorteilhaft genau eine Verbindungseinheit 54a auf. Die Verbindungseinheit weist insbesondere zumindest ein Verbindungselement 56a auf.

Insbesondere verbindet die Verbindungseinheit 54a, insbesondere mittels des Verbindungselements 56a, die erste Materiallage 22a und die zweite Materiallage 24a miteinander. In einem Betriebszustand befestigt die Verbindungseinheit 54a, insbesondere mittels des Verbindungselements 56a, insbesondere die erste Materiallage 22a und die zweite Materiallage 24a aneinander.

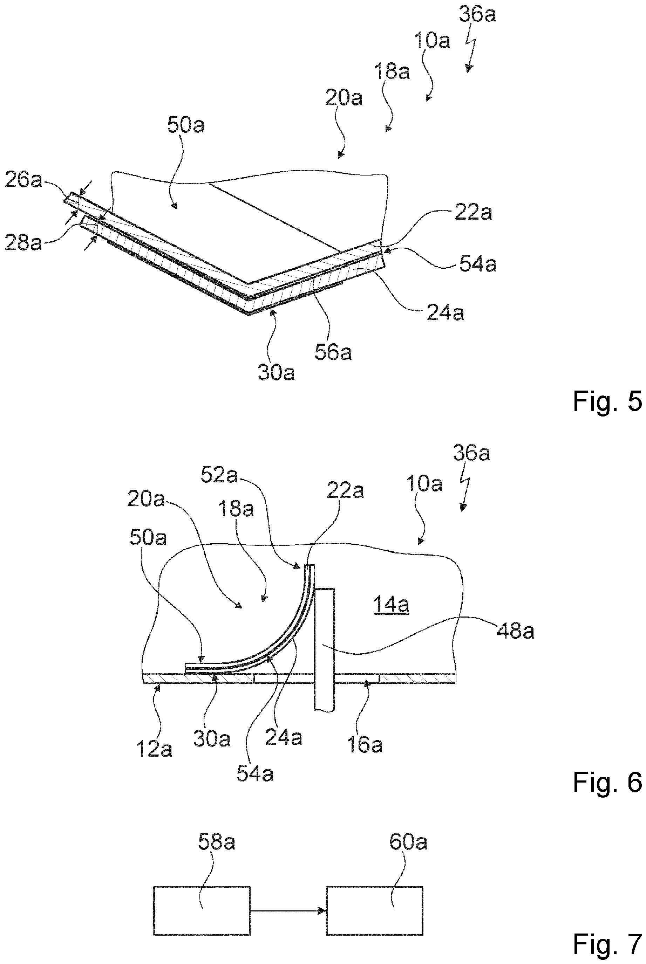

Insbesondere in dem in Figur 5 dargestellten Ausführungsbeispiel, ist das Verbindungselement 56a insbesondere ein beidseitiges Klebeband. Beispielsweise alternativ oder zusätzlich, könnte das Verbindungselement 56a beispielsweise ein Klebeelement und/oder eine Klebeschicht sein.

Insbesondere alternativ oder zusätzlich, könnte die Verbindungseinheit 54a in einem Betriebszustand die erste Materiallage 22a und die zweite Materiallage 24a beispielsweise mittels Klammern und/der mittels zumindest einer Formschlussverbindung und/oder mittels zumindest einer Kraftschlussverbindung miteinander verbinden. Beispielsweise im Fall von genau zwei Materiallagen 22a, 24a, wie beispielsweise der ersten Materiallage 22a und der zweiten Materiallage 24a, könnten die Materiallagen 22a, 24a durch Falten miteinander verbunden sein. Die Verbindungseinheit 54a, insbesondere im Fall von genau zwei Materiallagen 22a, 24a, könnte die erste Materiallage 22a und die zweite Materiallage 24a insbesondere mittels zumindest einer Faltung miteinander verbinden.

Die Verbindungseinheit 54a verbindet die erste Materiallage 22a und die zweite Materiallage 24a insbesondere flächig miteinander. Bei einer senkrechten Betrachtung auf eine Haupterstreckungsebene des Ventilelements 20a, welches sich insbesondere in einer Ruhelage des Ventilelements 20a befindet, weisen die Verbindungseinheit 54a und das Ventilelement 20a insbesondere wenigstens im Wesentlichen gleiche Flächenerstreckungen auf.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft.

Die erste Materiallage 22a und die zweite Materiallage 24a sind insbesondere wenigstens im Wesentlichen geometrisch identisch ausgebildet. Insbesondere weisen die erste Materiallage 22a und die zweite Materiallage 24a bei einer senkrechten Betrachtung auf eine Haupterstreckungsebene des Ventilelements 20a, welches sich insbesondere in einer Ruhelage des Ventilelements 20a befindet, wenigstens im Wesentlichen gleiche Flächenerstreckungen auf. Die erste Materiallage 22a und die zweite Materiallage 24a weisen insbesondere wenigstens im Wesentlichen gleiche Dicken 26a, 28a auf (vgl. Figur 5).

Insbesondere weist die erste Materiallage 22a eine Dicke 26a von wenigstens im Wesentlichen 0,5 mm auf. Die zweite Materiallage 24a weist insbesondere eine Dicke 28a von wenigstens im Wesentlichen 0,5 mm auf. Unter "wenigstens im Wesentlichen" soll in diesem Zusammenhang insbesondere verstanden werden, dass eine Abweichung von einem vorgegebenen Wert insbesondere maximal 25 %, vorzugsweise maximal 10 % und besonders bevorzugt maximal 5 % des vorgegebenen Werts beträgt.

Die erste Materiallage 22a und die zweite Materiallage 24a könnten beispielsweise wenigstens teilweise aus gleichem Material bestehen. Vorteilhaft bestehen die erste Materiallage 22a und die zweite Materiallage 24a insbesondere wenigstens zu einem Großteil aus verschiedenen Materialien. Im vorliegenden Ausführungsbeispiel besteht zumindest eine der Materiallagen 22a, 24a insbesondere wenigstens zu einem Großteil aus zumindest einem Kunststoff. Insbesondere besteht zumindest eine der Materiallagen wenigstens zu einem Großteil aus zumindest einem Flammschutzmaterial.

Zumindest eine der Materiallagen 22a, 24a besteht insbesondere wenigstens zu einem Großteil aus zumindest einem flexiblen Material, wie beispielsweise aus zumindest einem flexiblen Kunststoff und/oder aus zumindest einem flexiblen Flammschutzmaterial.

Insbesondere aufgrund des flexiblen Materials, aus welchem zumindest eine der Materiallagen 22a, 24a wenigstens zu einem Großteil besteht, strebt das Ventilelement 20a insbesondere im Anschluss an eine Auslenkung des Ventilelements 20a aus einer Ruheposition des Ventilelements 20a in eine Betriebsposition des Ventilelements 20a selbsttätig in die Ruheposition des Ventilelements 20a zurück. In der Ruheposition des Ventilelements 20a liegt das Ventilelement 20a insbesondere an dem Korpus 12a an und verschließt die Eintrittsöffnung 16a insbesondere wenigstens zu einem Großteil und vorteilhaft vollständig (vgl. Figuren 2 und 3).

Bei einem Einfüllen von Isolationsmaterial in den Isolationsraum 14a wird, beispielsweise bei einer Herstellung und vorteilhaft durch einen Monteur, das Einfüllwerkzeug 48a wenigstens teilweise in die Eintrittsöffnung 16a eingeführt. Das Einfüllwerkzeug 48a lenkt bei der Einführung in die Eintrittsöffnung 16a insbesondere das Ventilelement 20a aus der Ruheposition des Ventilelements 20a in die Betriebsposition des Ventilelements 20a aus (vgl. Figur 6). Insbesondere ist der weitere Abschnitt 52a des Ventilelements 20a in der Betriebsposition des Ventilelements 20a beabstandet zu dem Korpus 12a und/oder ausgelenkt relativ zu dem Korpus 12a angeordnet. Der Abschnitt 50a des Ventilelements 20a ist in der Betriebsposition des Ventilelements 20a insbesondere an dem Korpus 12a anliegend angeordnet und insbesondere mittels der Befestigungseinheit 30a an dem Korpus 12a befestigt.

Insbesondere wird im Anschluss an ein Einfüllen von Isolationsmaterial in den Isolationsraum 16a das Einfüllwerkzeug 48a, beispielsweise bei einer Herstellung und vorteilhaft durch einen Monteur, aus der Eintrittsöffnung 16a entfernt, wodurch insbesondere eine von dem Einfüllwerkzeug 48a auf das Ventilelement 20a ausgeübte Kraft wegfällt. Insbesondere bei Entfernen des Einfüllwerkzeugs 48a aus der Eintrittsöffnung 16a, strebt das Ventilelement 20a insbesondere selbsttätig ausgehend von der Betriebsposition des Ventilelements 20a (vgl. Figur 6) in die Ruheposition des Ventilelements 20a zurück (vgl. Figuren 2 und 3).

In einem Verfahren zu einer Herstellung einer Haushaltskältegerätevorrichtung 10a wird insbesondere die Ventileinheit 18a und vorteilhaft das Ventilelement 20a hergestellt. Insbesondere in zumindest einem ersten Verbindungsschritt 58a, werden zumindest eine der Materiallagen 22a, 24a und die Verbindungseinheit 54a, insbesondere zumindest eine der Materiallagen 22a, 24a und das Verbindungselement 56a, miteinander verbunden, und zwar vorteilhaft stoffschlüssig. Zumindest eine weitere das Materiallagen 22a, 24a und die Verbindungseinheit 54a, insbesondere zumindest eine weitere der Materiallagen 22a, 24a und das Verbindungselement 56a, werden, insbesondere in zumindest einem zweiten Verbindungsschritt 60a miteinander verbunden, und zwar vorteilhaft stoffschlüssig.

Insbesondere werden in dem Verfahren die erste Materiallage 22a und die von der ersten Materiallage 22a verschiedene zweite Materiallage 24a miteinander verbunden, und zwar insbesondere stoffschlüssig und vorteilhaft mittels beidseitigem Klebeband.

Insbesondere im Anschluss an eine Montage aller benötigten Komponenten des Haushaltskältegeräts 36a, läuft das Haushaltskältegerät 36a insbesondere zu einer Einschäumungsanlage, welche insbesondere zu einem Einfüllen von Isolationsmaterial in den Isolationsraum 14a vorgesehen ist. Ein Einfüllwerkzeug 48a der Einschäumungsanlage, welches beisipelsweise als Mischkopf ausgebildet und/oder bezeichnet ist, fährt bis zu einer vorher definierten Tiefe in einer senkrecht zu der Einfüllöffnung 16a ausgerichteten Richtung in die Einfüllöffnung 16a hinein. Die Einfüllöffnung 16a könnte sich beispielsweise in einem Gerätedeckel des Korpus 12a und/oder ein einer Schäumtraverse des Korpus 12a befinden.

Insbesondere bei Einführen des Einfüllwerkzeugs 48a in die Einfüllöffnung 16a biegt sich das Ventilelement 20a, beispielsweise um einen Winkel von wenigstens im Wesentlichen 60°, insbesondere in einer dem Isolationsraum 14a zugewandten Richtung und/oder nach innen. Insbesondere im Anschluss eines Einbringens einer entsprechend berechneten Menge an Isolationsmaterial in den Isolationsraum 16a durch das Einfüllwerkzeug 48a, fährt das Einfüllwerkzeug 48a insbesondere wieder aus der Einfüllöffnung 16a heraus und das Ventilelement 20a strebt selbsttätig in die Ruheposition des Ventilelements 20a zurück, und zwar insbesondere aufgrund einer durch die Materialien der Materiallagen 22a, 24a hervorgerufenen Rückstellkraft. In der Ruheposition des Ventilelements 20a drückt das Isolationsmaterial von innen und/oder schaumseitig gegen das Ventilelement 20a. Insbesondere verhindert das Ventilelement 20a insbesondere in der Ruheposition des Ventilelements 20a einen Austritt von Isolationsmaterial aus der Einfüllöffnung 16a.

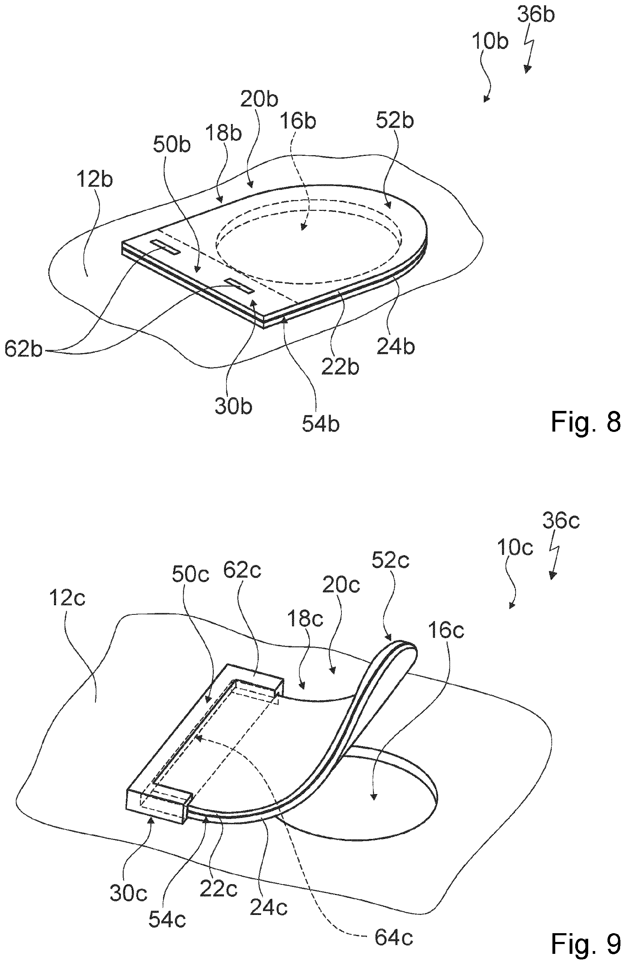

In Figuren 8 bis 10 sind drei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 7 verwiesen werden kann. Zur Unterscheidung der Ausführungsbeispiele ist der Buchstabe a in den Bezugszeichen des Ausführungsbeispiels in den Figuren 1 bis 7 durch die Buchstaben b bis d in den Bezugszeichen des Ausführungsbeispiels der Figuren 8 bis 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 7 verwiesen werden.

Figur 8 zeigt gemäß die Erfindung eine Haushaltskältegerätevorrichtung 10b mit einer Ventileinheit 18b und mit einer Befestigungseinheit 30b, welche in einem Betriebszustand insbesondere ein Ventilelement 20b der Ventileinheit 18b mit einem Korpus 12b der Haushaltskältegerätevorrichtung 10b verbindet. Das in Figur 8 dargestellte Ausführungsbeispiel unterscheidet sich von dem in den Figuren 1 bis 7 dargestellten Ausführungsbeispiel insbesondere durch eine Ausgestaltung der Befestigungseinheit 30b.

Die Befestigungseinheit 30b verbindet das Ventilelement 20b in einem Betriebszustand insbesondere fest mit dem Korpus 12b. Insbesondere weist die Befestigungseinheit 30b zumindest ein Befestigungselement 62b und vorteilhaft zumindest zwei Befestigungselemente 62b auf. Im Folgenden wird beispielhaft lediglich eines der Befestigungselemente 62b beschrieben.

Die Befestigungseinheit 30b verbindet das Ventilelement 20b in einem Betriebszustand insbesondere mittels des Befestigungselements 62b fest mit dem Korpus 12b. Das Befestigungselement 62b ist eine Klammer. Insbesondere verbindet die Befestigungseinheit 30b das Ventilelement 20b in einem Betriebszustand mittels zumindest einer Klammer und/oder mittels Anklammern mit dem Korpus 12b.

Figur 9 zeigt beispielhaft eine alternative Haushaltskältegerätevorrichtung 10c mit einer Ventileinheit 18c und mit einer Befestigungseinheit 30c, welche in einem Betriebszustand insbesondere ein Ventilelement 20c der Ventileinheit 18c mit einem Korpus 12c der Haushaltskältegerätevorrichtung 10c verbindet. Das in Figur 9 dargestellte Ausführungsbeispiel unterscheidet sich von dem in den Figuren 1 bis 7 dargestellten Ausführungsbeispiel insbesondere durch eine Ausgestaltung der Befestigungseinheit 30c. Im vorliegenden Ausführungsbeispiel verbindet die Befestigungseinheit 30c das Ventilelement 20c in einem Betriebszustand insbesondere lösbar und vorteilhaft werkzeuglos lösbar mit dem Korpus 12c. Insbesondere weist die Befestigungseinheit 30c zumindest ein und vorteilhaft genau ein Befestigungselement 62c auf. Das Befestigungselement 62c ist insbesondere einstückig mit dem Korpus 12c verbunden. Insbesondere alternativ oder zusätzlich, könnte das Befestigungselement 62c beispielsweise stoffschlüssig und/oder kraftschlüssig und/oder formschlüssig mit dem Korpus 12c verbunden sein.

Die Befestigungseinheit 30c weist insbesondere zumindest einen und vorteilhaft genau einen Aufnahmebereich 64c auf. Der Aufnahmebereich 64c ist insbesondere zu einer wenigstens teilweisen Aufnahme des Ventilelements 20c vorgesehen. In einem Betriebszustand nimmt der Aufnahmebereich 64c insbesondere das Ventilelement 20c wenigstens teilweise auf. Der Aufnahmebereich 64c nimmt in einem Betriebszustand insbesondere einen Abschnitt 50c des Ventilelements 20c wenigstens teilweise auf.

Das Befestigungselement 62c bildet insbesondere den Aufnahmebereich 64c aus. Insbesondere begrenzt und/oder definiert das Befestigungselement 62c den Aufnahmebereich 64c insbesondere wenigstens teilweise und vorteilhaft wenigstens zu einem Großteil.

Die Befestigungseinheit 30c verbindet das Ventilelement 20c in einem Betriebszustand insbesondere mittels des Befestigungselements 62c mit dem Korpus 12c. Insbesondere verbindet die Befestigungseinheit 30c das Ventilelement 20c in einem Betriebszustand insbesondere mittels zumindest einer Formschlussverbindung und/oder mittels zumindest einer Kraftschlussverbindung und/oder mittels Einschieben in den Aufnahmebereich 64c mit dem Korpus 12c.

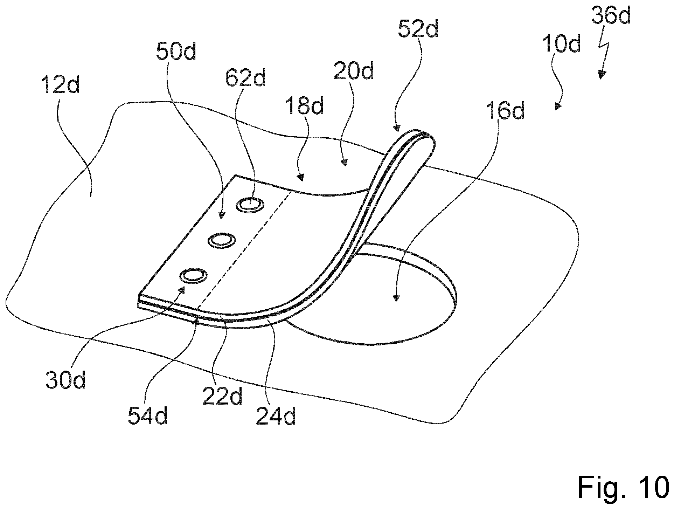

Figur 10 zeigt beispielhaft eine alternative Haushaltskältegerätevorrichtung 10d mit einer Ventileinheit 18d und mit einer Befestigungseinheit 30d, welche in einem Betriebszustand insbesondere ein Ventilelement 20d der Ventileinheit 18d mit einem Korpus 12d der Haushaltskältegerätevorrichtung 10d verbindet. Das in Figur 10 dargestellte Ausführungsbeispiel unterscheidet sich von dem in den Figuren 1 bis 7 dargestellten Ausführungsbeispiel insbesondere durch eine Ausgestaltung der Befestigungseinheit 30d.

Im vorliegenden Ausführungsbeispiel verbindet die Befestigungseinheit 30d das Ventilelement 20d in einem Betriebszustand insbesondere lösbar und vorteilhaft werkzeuglos lösbar mit dem Korpus 12d. Insbesondere weist die Befestigungseinheit 30d zumindest ein Befestigungselement 62d, vorteilhaft zumindest zwei Befestigungselemente 62d und besonders vorteilhaft zumindest drei Befestigungselemente 62d auf. Im Folgenden wird beispielhaft lediglich eines der Befestigungselemente 62d beschrieben.

Die Befestigungseinheit 30d verbindet das Ventilelement 20d in einem Betriebszustand insbesondere mittels des Befestigungselements 62d mit dem Korpus 12d. Das Befestigungselement 62d ist insbesondere ein Eingriffselement und greift in einem Betriebszustand insbesondere wenigstens teilweise durch das Ventilelement 20d hindurch. Beispielsweise könnte das Befestigungselement 62d eine Gestalt eines Knopfs aufweisen. Das Befestigungselement 62d könnte beispielsweise an dem Korpus 12d befestigt und/oder mit dem Korpus 12d verbunden sein.

Insbesondere verbindet die Befestigungseinheit 30c das Ventilelement 20c in einem Betriebszustand insbesondere mittels zumindest eines Eingriffselements und/oder mittels zumindest einer Formschlussverbindung und/oder mittels zumindest einer Kraftschlussverbindung mit dem Korpus 12c.

### Bezugszeichen

- 10: Haushaltskältegerätevorrichtung
- 12: Korpus
- 14: Isolationsraum
- 16: Einfüllöffnung
- 18: Ventileinheit
- 20: Ventilelement
- 22: Erste Materiallage
- 24: Zweite Materiallage
- 26: Dicke
- 28: Dicke
- 30: Befestigungseinheit
- 32: Gerätekorpus
- 34: Gerätetürkorpus
- 36: Haushaltskältegerät
- 38: Gerätetür
- 40: Weitere Gerätetür
- 42: Vertikalrichtung
- 44: Aufstellfläche
- 46: Steuereinheit
- 48: Einfüllwerkzeug
- 50: Abschnitt
- 52: Weiterer Abschnitt
- 54: Verbindungseinheit
- 56: Verbindungselement
- 58: Erster Verbindungsschritt
- 60: Zweiter Verbindungsschritt
- 62: Befestigungselement
- 64: Aufnahmebereich

## Patentansprüche

1. Haushaltskältegerätevorrichtung mit zumindest einem Korpus (12a-b), welcher zumindest einen Isolationsraum (14a-b) wenigstens teilweise begrenzt und welcher zumindest eine Einfüllöffnung (16a-b) zu einem Einfüllen von Isolationsmaterial in den Isolationsraum (14a-b) aufweist, und mit zumindest einer Ventileinheit (18a-b), welche zumindest ein Ventilelement (20a-b) aufweist, wobei das Ventilelement (20a-b) zumindest eine erste Materiallage (22a-b) und zumindest eine von der ersten Materiallage (22a-b) verschiedene zweite Materiallage (24a-b) aufweist, **gekennzeichnet durch** eine Befestigungseinheit (30a-b), die das Ventilelement (20a-b) in einem Betriebszustand mittels zumindest einer Klammer und/oder mittels Anklammern mit dem Korpus (12a-b) verbindet.

2. Haushaltskältegerätevorrichtung nach Anspruch 1, **dadurch gekennzeichnet, dass** die erste Materiallage (22a-b) und die zweite Materiallage (24a-b) miteinander verbunden sind.

3. Haushaltskältegerätevorrichtung nach Anspruch 1 oder 2, **dadurch gekennzeichnet, dass** die erste Materiallage (22a-b) und die zweite Materiallage (24a-b) stoffschlüssig miteinander verbunden sind.

4. Haushaltskältegerätevorrichtung nach einem der vorhergehenden Ansprüche,
**dadurch gekennzeichnet, dass** die erste Materiallage (22a-b) und die zweite Materiallage (24a-b) wenigstens im Wesentlichen geometrisch identisch ausgebildet sind.

5. Haushaltskältegerätevorrichtung nach einem der vorhergehenden Ansprüche,
**dadurch gekennzeichnet, dass** die erste Materiallage (22a-b) und die zweite Materiallage (24a-b) wenigstens zu einem Großteil aus verschiedenen Materialien bestehen.

6. Haushaltskältegerätevorrichtung nach einem der vorhergehenden Ansprüche,
**dadurch gekennzeichnet, dass** zumindest eine der Materiallagen (22a-b, 24ab) wenigstens zu einem Großteil aus zumindest einem Kunststoff besteht.

7. Haushaltskältegerätevorrichtung nach einem der vorhergehenden Ansprüche,
**dadurch gekennzeichnet, dass** zumindest eine der Materiallagen (22a-b, 24ab) wenigstens zu einem Großteil aus zumindest einem Flammschutzmaterial besteht.

8. Haushaltskältegerätevorrichtung nach einem der vorhergehenden Ansprüche,
**dadurch gekennzeichnet, dass** zumindest eine der Materiallagen (22a-b, 24ab) eine Dicke (26a-b, 28a-b) von maximal 0,9 mm aufweist.

9. Haushaltskältegerätevorrichtung nach einem der vorhergehenden Ansprüche,
**gekennzeichnet durch** zumindest eine Befestigungseinheit (30a-b), welche das Ventilelement (20a-b) in einem Betriebszustand fest mit dem Korpus (12a-b) verbindet.

10. Haushaltskältegerätevorrichtung nach einem der vorhergehenden Ansprüche,
**gekennzeichnet durch** zumindest eine Befestigungseinheit (30a-b), welche das Ventilelement (20a-b) in einem Betriebszustand gelenkfrei mit dem Korpus (12ab) verbindet.

11. Haushaltskältegerätevorrichtung nach einem der vorhergehenden Ansprüche,
**dadurch gekennzeichnet, dass** der Korpus (12a-b) ein Gerätekorpus (32a-b) ist.

12. Haushaltskältegerätevorrichtung nach einem der Ansprüche 1 bis 10, **dadurch gekennzeichnet, dass** der Korpus (12a-b) ein Gerätetürkorpus (34a-b) ist.

13. Haushaltskältegerät mit zumindest einer Haushaltskältegerätevorrichtung (10a-b) nach einem der vorhergehenden Ansprüche.

14. Verfahren zu einer Herstellung einer Haushaltskältegerätevorrichtung (10a-b), insbesondere nach einem der Ansprüche 1 bis 12, mit zumindest einem Korpus (12a-b), welcher zumindest einen Isolationsraum (14a-b) wenigstens teilweise begrenzt und welcher zumindest eine Einfüllöffnung (16a-b) zu einem Einfüllen von Isolationsmaterial in den Isolationsraum (14a-b) aufweist, und mit zumindest einer Ventileinheit (18a-b), welche zumindest ein Ventilelement (20a-b) aufweist, welches wenigstens abschnittsweise beweglich relativ zu dem Korpus (12a-b) an dem Korpus (12a-b) gelagert ist, wobei das Ventilelement (20a-b) zumindest eine erste Materiallage (22a-b) und zumindest eine von der ersten Materiallage (22ab) verschiedene zweite Materiallage (24a-b) aufweist, welche miteinander verbunden werden, **dadurch gekennzeichnet, dass** das Ventilelement 20b mittels zumindest einer Klammer und/oder mittels Anklammern mit dem Korpus 12b verbunden wird.

## Claims

1. Household refrigerating appliance device having at least one carcass (12a-b), which at least partially delimits at least one insulation room (14a-b) and which has at least one filling opening (16a-b) for filling insulation material into the insulation room (14a-b) and having at least one valve unit (18a-b), which has at least one valve element (20a-b), wherein the valve element (20a-b) has at least one first material layer (22a-b) and at least one second material layer (24a-b) which differs from the first material layer (22a-b), **characterised by** a fastening unit (30a-b) which connects the valve element (20a-b) in an operating state to the carcass (12a-b) by means of at least one bracket and/or by means of clamping.

2. Household refrigerating appliance device according to claim 1, **characterised in that** the first material layer (22a-b) and the second material layer (24a-b) are connected to one another.

3. Household refrigerating appliance device according to claim 1 or 2, **characterised in that** the first material layer (22a-b) and the second material layer (24a-b) are connected to one another with a material bond.

4. Household refrigerating appliance device according to one of the preceding claims, **characterised in that** the first material layer (22a-b) and the second material layer (24a-b) are embodied to be at least substantially geometrically identical.

5. Household refrigerating appliance device according to one of the preceding claims, **characterised in that** the first material layer (22a-b) and the second material layer (24a-b) consist at least largely of different materials.

6. Household refrigerating appliance device according to one of the preceding claims, **characterised in that** at least one of the material layers (22a-b, 24a-b) consists at least largely of at least one plastic.

7. Household refrigerating appliance device according to one of the preceding claims, **characterised in that** at least one of the material layers (22a-b, 24a-b) consists at least largely of at least one flame retardant material.

8. Household refrigerating appliance device according to one of the preceding claims, **characterised in that** at least one of the material layers (22a-b, 24a-b) has a thickness (26a-b, 28a-b) of at most 0.9 mm.

9. Household refrigerating appliance device according to one of the preceding claims, **characterised by** at least one fastening unit (30a-b) which connects the valve element (20a-b) in an operating state fixedly to the carcass (12a-b).

10. Household refrigerating appliance device according to one of the preceding claims, **characterised by** at least one fastening unit (30a-b) which connects the valve element (20a-b) to the carcass (12a-b) in a joint-free manner.

11. Household refrigerating appliance device according to one of the preceding claims, **characterised in that** the carcass (12a-b) is an appliance carcass (32a-b).

12. Household refrigerating appliance device according to one of claims 1 to 10, **characterised in that** the carcass (12a-b) is an appliance door carcass (34a-b).

13. Household refrigerating appliance device having at least one household refrigerating appliance device (10a-b) according to one of the preceding claims.

14. Method for manufacturing a household refrigerating appliance device (10a-b), in particular according to one of claims 1 to 12, having at least one carcass (12a-b), which at least partially delimits an insulation room (14a-b) and which has at least one filling opening (16a-b) to fill insulation material into the insulation space (14a-b) and having at least one valve unit (18a-b) which has at least one valve element (20a-b), which is mounted movably on the carcass (12a-b) at least in sections relative to the carcass (12a-b), wherein the valve element (20a-b) has at least one first material layer (22a-b) and at least one second material layer (24a-b) which differs from the first material layer (22a-b), which are connected to one another, **characterised in that** the valve element 20b is connected to the carcass 12b by means of at least one bracket and/or by means of clamping.

## Revendications

1. Dispositif d'appareil de froid électroménager avec au moins une structure (12a-b), qui délimite au moins partiellement au moins un espace d'isolation (14a-b) et qui présente au moins une ouverture de remplissage (16a-b) pour un remplissage de matériau isolant dans l'espace d'isolation (14a-b), et avec au moins une unité de soupape (18a-b), qui présente au moins un élément de soupape (20a-b), dans lequel l'élément de soupape (20a-b) présente au moins une première couche de matériau (22a-b) et au moins une seconde couche de matériau (24a-b) différente de la première couche de matériau (22a-b), **caractérisé par** une unité de fixation (30a-b) qui, dans un état de fonctionnement, relie l'élément de soupape (20a-b) à la structure (12a-b) au moyen d'au moins une agrafe et/ou par agrafage.

2. Dispositif d'appareil de froid électroménager selon la revendication 1, **caractérisé en ce que** la première couche de matériau (22a-b) et la seconde couche de matériau (24a-b) sont reliées l'une à l'autre.

3. Dispositif d'appareil de froid électroménager selon la revendication 1 ou 2, **caractérisé en ce que** la première couche de matériau (22a-b) et la seconde couche de matériau (24a-b) sont reliées l'une à l'autre par une liaison de matière.

4. Dispositif d'appareil de froid électroménager selon l'une des revendications précédentes, **caractérisé en ce que** la première couche de matériau (22a-b) et la seconde couche de matériau (24a-b) sont formées au moins essentiellement de manière géométriquement identique.

5. Dispositif d'appareil de froid électroménager selon l'une des revendications précédentes, **caractérisé en ce que** la première couche de matériau (22a-b) et la seconde couche de matériau (24a-b) sont constituées au moins en grande partie de différents matériaux.

6. Dispositif d'appareil de froid électroménager selon l'une des revendications précédentes, **caractérisé en ce qu'**au moins l'une des couches de matériau (22a-b, 24a-b) est constituée au moins en grande partie d'au moins une matière plastique.

7. Dispositif d'appareil de froid électroménager selon l'une des revendications précédentes, **caractérisé en ce qu'**au moins l'une des couches de matériau (22a-b, 24a-b) est constituée au moins en grande partie d'au moins un matériau ignifuge.

8. Dispositif d'appareil de froid électroménager selon l'une des revendications précédentes, **caractérisé en ce qu'**au moins l'une des couches de matériau (22a-b, 24a-b) présente une épaisseur (26a-b, 28a-b) maximale de 0,9 mm.

9. Dispositif d'appareil de froid électroménager selon l'une des revendications précédentes, **caractérisé par** au moins une unité de fixation (30a-b) qui relie solidement l'élément de soupape (20a-b) à la structure (12a-b) dans un état de fonctionnement.

10. Dispositif d'appareil de froid électroménager selon l'une des revendications précédentes, **caractérisé par** au moins une unité de fixation (30a-b) qui relie l'élément de soupape (20a-b) à la structure (12a-b) sans articulation dans un état de fonctionnement.

11. Dispositif d'appareil de froid électroménager selon l'une des revendications précédentes, **caractérisé en ce que** la structure (12a-b) est une structure d'appareil (32a-b).

12. Dispositif d'appareil de froid électroménager selon l'une des revendications 1 à 10, **caractérisé en ce que** la structure (12a-b) est une structure de porte d'appareil (34a-b).

13. Appareil de froid ménager avec au moins un dispositif d'appareil de froid électroménager (10a-b) selon l'une des revendications précédentes.

14. Procédé de fabrication d'un dispositif d'appareil de froid électroménager (10a-b), notamment selon l'une des revendications 1 à 12, avec au moins une structure (12a-b), qui délimite au moins partiellement au moins un espace d'isolation (14a-b) et qui présente au moins une ouverture de remplissage (16a-b) pour un remplissage de matériau isolant dans l'espace d'isolation (14a-b), et avec au moins une unité de soupape (18a-b), qui présente au moins un élément de soupape (20a-b), qui est logé sur la structure (12a-b) de manière mobile au moins par sections par rapport à la structure (12a-b), dans lequel l'élément de soupape (20a-b) comprend au moins une première couche de matériau (22a-b) et au moins une seconde couche de matériau (24a-b) différente de la première couche de matériau (22a-b), qui sont reliées entre elles, **caractérisé en ce que** l'élément de soupape (20b) et la structure (12b) sont reliés au moyen d'au moins une agrafe et/ou par agrafage.
